# EUROPEAN PATENT SPECIFICATION

(11) **EP 3 097 258 B1**
(45) Date of publication and mention of the grant of the patent: **11.03.2020**
(21) Application number: 15700501.8
(22) Date of filing: 20.01.2015
(51) Int. Cl.: E21B 41/00, E21B 47/18

(54) **WELLBORE ENERGY COLLECTION**
BOHRLOCHERNERGIEGEWINNUNG
RÉCOLTE D'ÉNERGIE DANS UN PUITS DE FORAGE

(30) Priority: 20.01.2014 GB 201400937
(43) Date of publication of application: 30.11.2016
(73) Proprietor: Tendeka AS, 4033 Stavanger (NO)
(72) Inventor: NALDRETT, Garth, Aberdeen AB12 3HT (GB)
(74) Representative: Docherty, Andrew John
(86) International application number: PCT/EP2015/051004
(87) International publication number: WO 2015/107216

(56) References cited:
- GB-A- 2 397 316
- GB-A- 2 437 433
- GB-A- 2 461 194
- US-A- 5 101 907
- US-A1- 2005 168 349
- US-A1- 2011 155 393

## Description

### Field of the Invention

The invention relates to a method and apparatus for collection energy in a well from fluid pressure variations in the well, and in particular to a method and apparatus for use in generating power for logging of a non-producing well.

### Background to the Invention

In the oil and gas industry, wells are drilled into the earth to intercept subterranean formations, which typically include a combination of oil, gas and water. Throughout the lifetime of a well, it may be required to introduce apparatus into a well, the operation of which requires a source of power.

For example, it may be required to measure conditions (such as temperature, pressure, water content and the like) and/or to control devices, such as valves, sleeves, or other devices. Power for such apparatus may be required throughout and in some cases for some time after the operational lifetime of a well, sometimes over the course of many years.

In some instances it may be impractical or impossible to supply power from the surface. Increasingly, placing of downhole components may conflict with future access requirements. For example, it may not be possible for power transmission cables to bypass packers. Apparatus may also become isolated, for example in an old branch of a multilateral well, or where topside installations are removed or abandoned.

Power may be supplied from electrical cells or batteries introduced into a well, but these can only supply power for relatively short periods and are generally considered to be unsuitable for powering down hole equipment over prolonged periods. Accordingly, there remains a need for improved means to power apparatus in a well, particularly to supply power over long periods of time.

US2011155393 describes an apparatus that is usable with a well includes an operator and a generator. The operator is disposed in the well and configured to respond to a differential pressure between hydraulically isolated zones of the well to produce mechanical motion. These zones may be zones that are located on opposite sides of a packer of the tubing string or a first zone inside of the tubing string and a second zone outside of the tubing string, for example. The generator is disposed in the well to convert the mechanical motion into electricity. Since the apparatus operates using a pressure differential set up between two hydraulically isolated zones, unlike turbines, the apparatus does not require a continuous fluid flow (i.e., which is not possible in a suspended or shut in well for example).

GB2461194 describes a system for generating downhole power that includes a wave generator to generate fluid waves that can move through a fluid channel to an underground location. A convertor positioned underground converts the wave energy into electrical energy. The fluid channel may be an annulus between well equipment string and a wellbore wall. An electrical storage device may be positioned downhole and coupled to the convertor. A tool may be coupled to the storage device and be powered at least in part by the energy stored in the storage device.

GB2397316 describes a remotely energized actuator device that facilitates storage of energy needed to actuate a downhole tool after the device is placed downhole. A gas chamber charged with a gas at the surface contains an annular piston which is acted upon by hydrostatic pressure as it is lowered into the well. Pressure in the chamber is then increased via a tubing until piston locks into position via ratchet mating surfaces. This trapped pressure may be used for actuating a tool or an isolation or safety valve. Alternatively to the gas chamber, a mechanical spring may be used.

GB2437433 describes deploying wireless tags in a well to measure properties of the well as the tags flow through the well, and using vibrational energy transferred to the tags during the flowing through the well to activate and power the tags. The tags can be used to monitor various downhole conditions.

### Summary of the Invention

Various aspects of the present invention are defined in the independent claims. Some preferred features are defined in the dependent claims.

Described herein is a method of collecting energy in a well, comprising providing an energy collecting arrangement in a well, and using the energy collecting arrangement to collect energy from variations in fluid pressure in the well due to variations in lithostatic pressure.

The method may comprise collecting energy in a non-producing well, such as a shut-in well. The method may comprise collecting energy in a subsea well.

The variations in fluid pressure in the well due to variations in lithostatic pressure, may for example result from tidal pressure variations. The variations in fluid pressure may be cyclic. The variations in fluid pressure may result from changes in fluid flow in the well. For example, the flow of fluid and thus the pressure in a well may change naturally over the course of time, or as a result of changes in fluid flow or pressure in an adjacent well.

The method may comprise operating a downhole tool, or downhole apparatus, using the collected energy.
The collected energy may be mechanical energy or may be electrical energy (which may be later converted into mechanical energy). Mechanical energy may for example be collected as potential energy in a resilient member, or as potential energy in a pressurised fluid.
The method may comprise running the energy collecting arrangement into a well. The method may comprise running a downhole tool comprising the energy collecting arrangement, into a well. The method may comprise subsequently shutting-in a well.

The method may comprise collecting electrical energy by electromagnetic induction. The method may comprise collecting electrical energy from a piezoelectrically generated voltage. The method may comprise collecting mechanical energy.

The energy collecting arrangement may comprise one or more energy collectors.

The energy collecting arrangement may comprise one or more electrical energy collectors. For example, an energy collector may comprise a piezoelectric element or an energy collector may comprise an inductor in moveable relation to a permanently magnetic member.

The energy collecting arrangement may comprise one or more mechanical energy collectors. For example, an energy collector may comprise a moveable member (e.g. a diaphragm) operably connected to downhole apparatus, for example via an addressable mechanism such as a ratchet mechanism.

The collected energy may be used immediately (i.e. substantially at the same time or over the same period as a fluid pressure variation). The collected energy may be stored, for later use.

Accordingly, the method may comprise storing energy. The method may comprise storing the energy in a well, for example using an energy storage arrangement connected to, or forming a part of, the energy collecting arrangement.

The stored energy may be stored electrical energy (e.g. in a battery) or may be stored mechanical energy (e.g. potential energy in a resilient member such as a spring).

The method may comprise collecting data relating to a downhole property, or more than one downhole property.

The method may comprise collecting data using a sensor arrangement. The method may comprise powering the sensor arrangement using electrical energy collected by the energy collecting arrangement. The method may comprise powering the sensor arrangement using stored electrical energy.

The method may comprise storing the collected data, for example on a data store.

The downhole tool/apparatus may include well control apparatus, e.g. one or more inflow control devices, such as one or more inflow control valves, slideable sleeve segments and the like. The downhole tool/apparatus may be operated using collected or stored energy, which may be electrical or mechanical energy.

The downhole apparatus may be addressable, i.e. may be operable by way of a predefined series/number of steps. The downhole apparatus may be mechanically addressable. Accordingly, the method may comprise operating a downhole tool/apparatus by way of a predefined series/number of induced fluid pressure variations in the well.

The tool/apparatus may be operated incrementally, each of the pressure variations in the well moving downhole apparatus (e.g. addressable apparatus) by an increment (e.g. to the next addressed position).

The method may comprise communicating with the energy collecting arrangement, or a downhole tool, wirelessly. The method may comprise issuing wireless control signals, for example to control a sensor arrangement, or to activate, deactivate or otherwise control the energy collecting arrangement. The method may comprise receiving wireless signals, for example data transmitted wirelessly from a downhole tool.

The method may comprise communicating wirelessly by way of induced pressure variations.

The method may comprise collecting energy (continuously, or intermittently) over a long period of time, for example over a period of months or years (e.g. 5-10 years, or greater than 10 years).

The method may comprise collecting data (continuously, or intermittently) over a long period of time, for example over a period of months or years (e.g. 5-10 years, or greater than 10 years).

According to a second aspect of the invention there is provided a wellbore energy collecting arrangement configured to collect energy in a well from fluid pressure variations in the well due to variations in lithostatic pressure.

The wellbore energy collecting arrangement may be configured to collect energy from variations in fluid pressure and/or from a fluid pressure differential.
The fluid pressure in a well may be in the region of approximately 200-30,000 psi (or approximately 10-2,000 Bar). Accordingly, the wellbore energy collecting arrangement may be configured to function in the operating conditions, and in particular the fluid pressures, encountered in a well.

Lithostatic pressure (also known as overburden pressure) may vary, for example, due to tides or temperature fluctuations in a well. The variations in fluid pressure may be caused by topside activities, for example by pumping or introducing drilling mud or other fluids into the same, or an adjacent well. The variations in fluid pressure may be caused by changes in fluid flow in the well.
The wellbore energy collecting arrangement may be configured to collect electrical energy from a pressure differential between a first fluid volume and a second fluid volume.
A first fluid volume may be a fluid volume inside a tubular. A first fluid volume may be defined by the wellbore energy collecting arrangement and, for example, may be an isolated fluid volume internal to the energy collecting arrangement. A second fluid volume may be, or may be in fluid communication with, a fluid volume outside the wellbore energy collecting arrangement, such as a fluid volume outside of a tubular, or a fluid volume in a well or a casing in a well.

The wellbore energy collecting arrangement may comprise one or more energy collectors. The energy collecting arrangement may comprise one or more electrical energy collectors. For example, an energy collector may comprise a piezoelectric device, configured to generate a voltage which varies in response to variations in pressure.

The piezoelectric device may be adapted to flex or compress, responsive to pressure.

The piezoelectric device may comprise one, or more than one piezoelectric element. For example, a piezoelectric device may comprise a multi-layer element, comprising for example a stack of two or more layers of piezoelectric material, or a cantilever comprising two or more layers of piezoelectric material.

The wellbore energy collecting arrangement may comprise an energy collector configured to collect, or generate, electrical energy by way of induction. Accordingly, the wellbore energy collecting arrangement may comprise an inductor and a permanently magnetic member, moveable in relation to one another.

The wellbore energy collecting arrangement may comprise one or more mechanical energy collectors. For example, an energy collector may comprise a moveable member operably connected, for example via an addressable mechanism such as a ratchet mechanism, to mechanical apparatus.

An energy collector (electrical or mechanical) may comprise a moveable member, such as a diaphragm, piston or turbine (e.g. a microturbine).

The moveable member may serve to transmit and/or to amplify a motion or deflection caused by changes in fluid pressure.

The moveable member may be disposed between first and second fluid volumes. Accordingly, changes in relative fluid pressures of the first and second fluid volumes may cause displacement of the moveable member.

The moveable member may form part of, or be coupled to, an energy collector.

For example, the moveable member may comprise or be coupled to an inductor or a permanently magnetic member. Accordingly, movement of the moveable member may cause a voltage to be induced.
The wellbore energy collecting arrangement may comprise a piezoelectric device coupled to a moveable member, such as a diaphragm (for example, disposed between distinct fluid volumes) or "cymbal" arrangement. Thus, changes in the pressure differential across the diaphragm may cause changes in the stress and/or strain received by a piezoelectric device.

Alternatively, or in addition, the wellbore energy collecting arrangement may comprise a piston (positioned between distinct fluid volumes). Movement of the piston may induce a voltage, or may displace a fluid through a turbine so as to induce a voltage. Movement of the piston may cause movement of a resilient member (so as to store mechanical energy in the resilient member). Movement of the piston may be coupled to movement of other mechanical apparatus, for example a wellbore control apparatus. Thus, the piston, or other moveable member, may be coupled to a resilient member or other mechanical apparatus via a mechanical coupling. The mechanical coupling may be indexed or addressable. Thus, movement of the mechanical member may be transmitted incrementally via the mechanical coupling.
The wellbore energy collecting arrangement may comprise more than one energy collector and/or more than one type of energy collector.
The invention extends in a third aspect to a downhole tool comprising a wellbore energy collecting arrangement configured to collect energy in a well from fluid pressure variations in the well due to variations in lithostatic pressure.
The downhole tool may comprise a sensor arrangement, operable to collect data relating to sensor readings.

The sensor arrangement may be configured to determine at least one downhole property.

The sensor arrangement may be configured to determine one or more downhole properties selected from (but not limited to) the group of downhole properties comprising;
temperature; chemical composition, such as composition of a chemical element or elements, e.g. carbon composition, oxygen composition; water saturation, salinity, interfacial properties, conductivity, acoustic properties.

The sensor arrangement may comprise one or more sensors. The sensor arrangement may comprise a sensor array. The sensor arrangement may comprise one or more sensors selected from (but not limited to); a diaphragm type pressure sensor, a transducer type sensor, a distributed temperature or pressure sensor (e.g. an optical fibre-type distributed sensor).

The wellbore energy collecting arrangement may be operable to function as a sensor arrangement.

A magnitude of an electrical signal (voltage or current) generated by the wellbore energy collecting arrangement may be used as a sensor reading. For example, a magnitude of an electrical signal may correspond to a certain stress or strain received by a piezoelectric device, and so may correspond to a fluid pressure applied to the piezoelectric device; or a magnitude of an induced current/voltage may correspond to a rate of change of pressure. In some embodiments, the differences between electrical signals generated by corresponding electrical sensors, and/or differences in electrical signals generated over time, may be used as a sensor reading.

The wellbore energy collecting arrangement may be operable to function to collect energy for a first period of time and to function as a sensor arrangement for a second period of time.

The downhole tool, or the wellbore energy collecting arrangement, may comprise a power storage arrangement. Accordingly, the power storage arrangement may be configured to receive and store collected energy, for later use. For example, the power storage arrangement may be "trickle-charged" over a period of time (for example days or weeks).

The power storage arrangement may comprise one, or more than one power store. The power storage arrangement may for example comprise one or more capacitive storage devices, and/or an electrical cell or a battery of electrical cells. The power storage arrangement may for example comprise one or more mechanical storage devices, such as a resilient or elastic member, and/or a fluid accumulator.

Each energy collector may be associated with a power store. Each power store may be associated with one, or more than one energy collector.

The downhole tool, or the wellbore energy collecting arrangement, may comprise a communication arrangement. The communication arrangement may be operable to communicate information to and from the surface (for example to equipment on a surface installation, such as a rig or a ship), when the tool/arrangement is positioned in a well.

The communication arrangement may be configured to send and/or receive information wirelessly. The communication arrangement may comprise a wireless transmitter, receiver and/or transceiver.

Information may be transmitted/received wirelessly by way of electromagnetic signals, such as radio frequency or microwave frequency signals.

Information may be transmitted/received wirelessly by way of pressure changes (for example a sequence of induced pressure variations) or acoustic signals.

Wireless information may be received by a wireless transceiver, such as a pressure or acoustic transceiver.

The wellbore energy collecting arrangement and/or the sensor arrangement may be configured to receive wireless information and thereby function as a communication arrangement.

Electromagnetic information may be transmitted/received wirelessly by way of a wireless communication standard such as a ZigBee standard, or a telecommunications standard such as GSM, GPRS or UMTS.

Wirelessly transmitted information may be used to control the downhole tool, or the wellbore energy collecting arrangement. Wireless information may, for example, trigger activation or operation of the energy collecting arrangement, or component parts of the downhole tool such as a sensor arrangement, or a transmitter. Wirelessly transmitted information may cause the wellbore energy collecting arrangement to change between a configuration in which the wellbore energy collecting arrangement collects energy, and a configuration in which the wellbore energy collecting arrangement functions as a sensor arrangement.

The communication arrangement may be configured to send/receive information wirelessly over long and/or short range.

For example, in use of the downhole tool in a well, information may be wirelessly transmitted/received between the downhole tool and equipment at the surface, or on the sea bed. Information may alternatively be wirelessly transmitted/received over a shorter range, for example between the downhole tool and equipment introduced into a part of a well in proximity to the downhole tool.

The communication arrangement may be configured to send and/or receive information by way of a physical connection. For example, the communication arrangement may comprise, or be in connection with, an electrical conduit (e.g. a wireline), an optical fibre, or a hydraulic conduit, or the like.

The downhole tool, or the wellbore energy collecting arrangement, may comprise a control module, operable to receive control information received from the communication arrangement. The control module may comprise a processing resource, such as a computer processor.

The downhole tool may comprise a data store, configured to store data received from the sensor arrangement (such as raw or processed sensor data). Stored data may be transmitted by the communication arrangement, for example periodically or consequent to received control information.

The downhole tool may be a data logging downhole tool. Downhole measurements may be required before, during and in some cases for prolonged periods after the producing lifetime of a well. A downhole tool in accordance with the invention is configured to collect, generate and/or store energy in situ and is therefore capable of providing power for downhole measurements to be performed indefinitely.

The downhole tool or the wellbore energy collecting arrangement may comprise or be connected to, well control apparatus, e.g. one or more inflow control devices, such as one or more inflow control valves, slideable sleeve segments and the like.

In use, data received from the sensor arrangement may be used to inform well control decisions, and well control operations may be executed by control apparatus powered by the wellbore energy collecting arrangement or the power storage arrangement.

The downhole tool, or the wellbore energy collecting arrangement, may comprise or be coupled to a body, such as a tubular body or mandrel. The body may be configured to be coupled to a tubular at one or both ends, for example so as to form part of a tubing string.

The downhole tool, or one or more component parts thereof (e.g. the wellbore energy collecting arrangement, or the electrical collector(s)), may be recessed into the body. For example, the body may comprise a gauge mandrel into which the downhole tool or component parts thereof are recessed.

The body may define an isolated first fluid volume, which may be internal to the body. The wellbore energy collecting arrangement (or a component part of the energy collecting arrangement, such as a moveable member and/or a piezoelectric element) may be disposed between the first fluid volume and a second fluid volume external to the body (e.g. inside or outside of a tubular body) or in fluid communication with fluid external to the body.

Further preferred and optional features of each aspect of the invention correspond to preferred and optional features of any other aspect of the invention.

### Description of the Drawings

Non-limiting example embodiments of the invention will now be described with reference to the following figures in which:
Figure 1 shows a downhole tool, comprising a wellbore energy collecting arrangement, in accordance with an embodiment of the invention.
Figure 2 is a schematic representation of a vessel in communication with a downhole logging tool positioned in a shut-in well.
Figure 3 shows a wellbore energy collector of the apparatus shown in Figure 1.
Figure 4 shows variations in (a) tide level and (b) maximum and minimum lithostatic pressure in a well.
Figure 5 shows alternative downhole apparatus in accordance with the invention.
Figure 6 is a schematic representation of the apparatus of Figure 5 in a producing well.

### Detailed Description of Example Embodiment

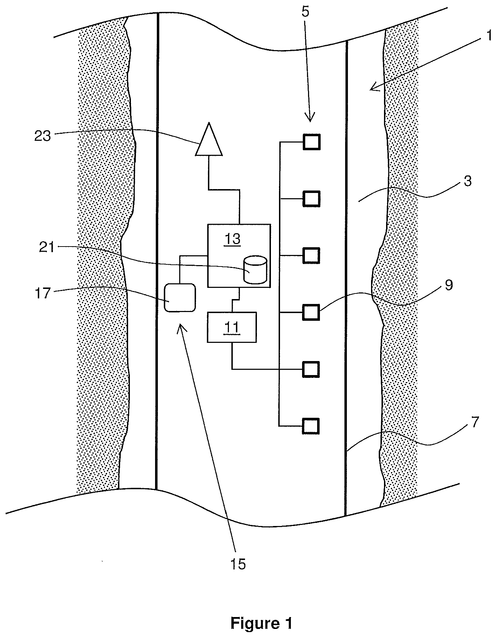

Figure 1 shows a downhole tool 1 positioned in a well 3 of a shut-in, non-producing well. The downhole tool is typically run into the well as part of a tubing string, for example during completion of the well, or during the operational lifetime of a well. The downhole tool 1 comprises a wellbore energy collecting arrangement 5 on a tubular body 7. The energy collecting arrangement 5 comprises an array of energy collectors 9, and is configured to collect energy responsive to fluid pressure variations in the well 3.

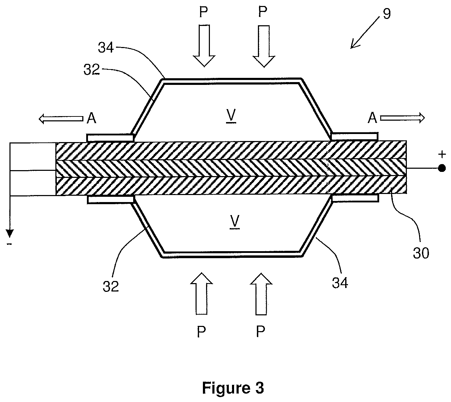

The wellbore energy collecting arrangement 5 comprises an array of energy collectors 9, which are described in further detail below with reference to Figure 3.

The downhole tool 1 further comprises a power store 11, in the form of an electrical battery, in electrical connection with the energy collectors 9. A control module 13 is operable to draw electrical power from the electrical battery 11, and control the operation of the sensor arrangement 15. In the embodiment shown, the sensor arrangement is comprised of a temperature sensor 17. In alternative embodiments (not shown) the power store and control module may be used to power and control the operation of other apparatus, such as another type of sensor and/or well control apparatus, of types known in the field of oil and gas operations.

The control module 13 also includes a data store 21, for storing data collected by the sensor arrangement 15. Optionally, the control module may also be configured to periodically detect the voltage generated by the collectors 9. As described above, the voltage varies with fluid pressure in the well and thus data stored on the data store 21 may also include voltages generated by the collectors 9, or corresponding well pressure values.

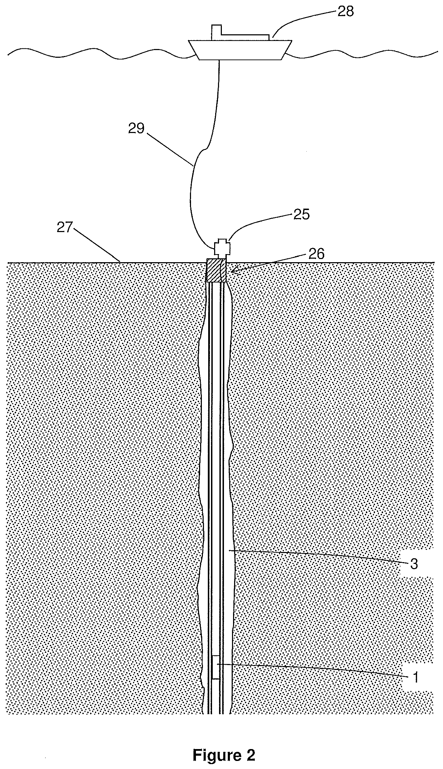

An acoustic wireless transceiver 23 is connected to the control module and mounted on the tubular 7. In use, the operation of the apparatus 1 can be controlled by way of control signals sent wirelessly from topside apparatus. For example, control signals and stored data may be transmitted between the downhole tool and a communication node 25 having an acoustic transceiver (not shown) coupled to the wellhead 26 of the well 3, on the sea bed 27; as shown schematically in Figure 2. In the embodiment shown, the communication may be established between a vessel 28 by way of a conduit 29, to enable logging data to be periodically acquired from the downhole tool 1.

Figure 3 shows a detail schematic view of an energy collector 9 of the tool 1. The energy collector is in the form of a cymbal-type piezoelectric device. The energy collector 9 comprises a stack of piezoelectric elements 30, which are electrically connected to the battery 11 (electrical connections depicted by terminals + and -). The piezoelectric elements 30 are attached to deformable end caps, or "cymbals" 32. The caps enclose isolated fluid volumes V. The external faces 34 of the end caps are in fluid communication with fluid external to the apparatus 1.

An increase in the external pressure P applied to the surfaces 34 causes a change in the compression of the cymbal, which is translated into extension of the piezoelectric elements 30, in the direction A. Conversely, the cymbals expand, and the piezoelectric elements contract, if the external pressure is reduced. Thus, when the apparatus is positioned in a well, the pressure differential between the isolate volumes V and the external pressure applied to the surfaces 34 varies with changes in the fluid pressure in the well, including the tidal changes in lithostatic pressure. Accordingly, the piezoelectric elements generate an oscillating electrical voltage, corresponding to tidal lithostatic pressure changes.

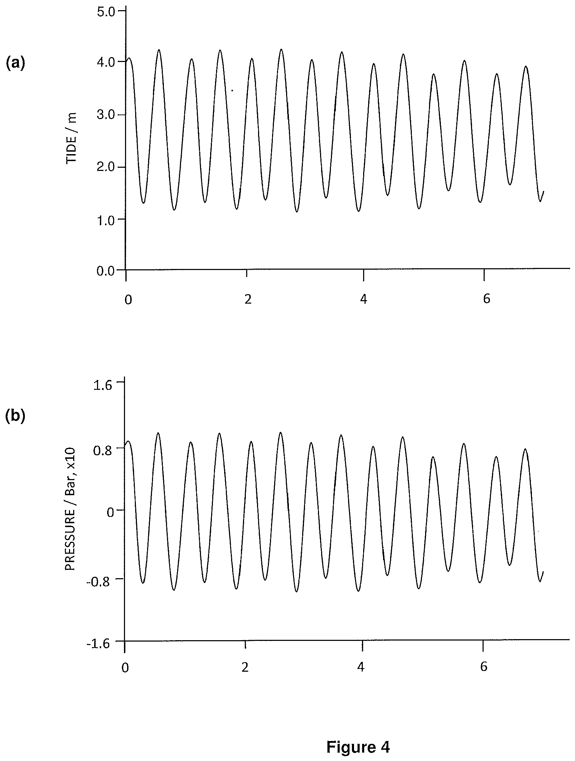

In offshore environments, the effect of sea tides on reservoir pressure is typically regarded as an artefact recorded during monitoring applications, such as well testing pressure build-up or other static pressure monitoring applications. However, in many locations around the globe, significant water depth changes occur during tidal cycles and these changes in water depth may cause a measurable change in reservoir pressure, in the order of 0.8-1 bar. Figure 4(a) shows a diagrammatic representation of tidal sea level variation over a 7 day period. Figure 4(b) shows corresponding variations around the average lithostatic/overburden pressure measured in a well.

The wellbore energy collecting arrangement 5 is configured to collect electrical energy responsive to pressure variation in the well of this order of magnitude. These tidal pressure variations provide for a predictable and reliable energy source. The collected electrical energy charges the battery 11, and provides sufficient power for periodic readings to be periodically acquired (e.g. daily, weekly, or monthly) by the sensor arrangement 15 and stored on the data store 21. The battery may be supplied with power indefinitely, and thus the apparatus 1 may be used for data logging over far longer periods (up to several years) than logging apparatus having a stand-along battery with a finite amount of available charge.

In some examples (not shown) pressure variations in the well could be induced, by changing the flow of fluid in the wellbore. For example, intermittent flow could temporarily be re-started in a shut-in well, so as to induce pressure variations and charge (or re-charge) the battery 11. In use of the tool 1 in a producing well, the rate of production could be intentionally varied so as to induce pressure variations consequent to the changes in the fluid flow in the well.

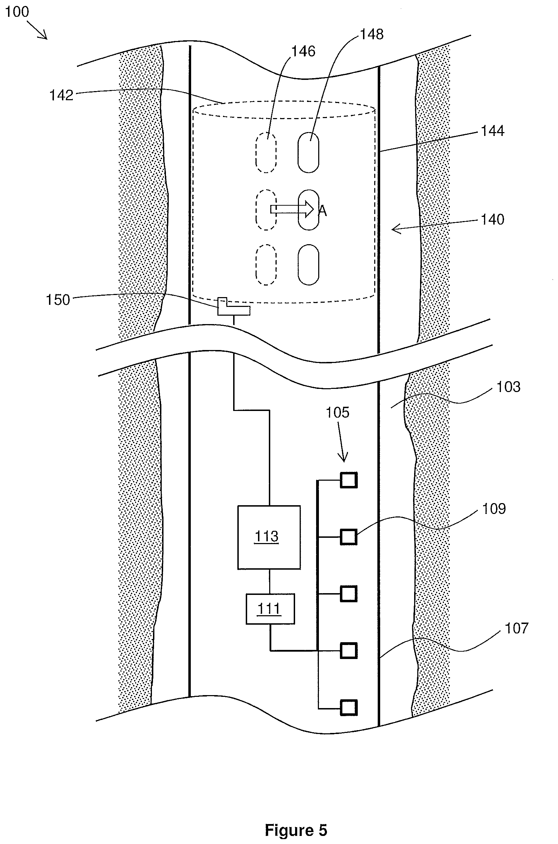

Figure 5 shows an alternative embodiment of downhole apparatus 100 in accordance with the invention. Features of apparatus 100 which are common to apparatus 1 are provided with like reference numerals, incremented by 100.

The wellbore energy collecting arrangement 105 comprises an array of energy collectors 109, which are described above with reference to Figure 3. The wellbore energy collecting arrangement 105 is mounted to a tubular 107, which part of a tubing string.

Also mounted to the tubular 107 is a power store 111, in the form of an electrical battery, in electrical connection with the energy collectors 109. A control module 113 is operable to draw electrical power from the electrical battery 111, and control the operation of an inflow control device 140.

In the embodiment shown, the inflow control device includes a slideable sleeve 142, which is operable to slide within tubular 144. The sliding sleeve is provided with a series of inner ports 146 and the tubular 144 is provided with corresponding outer ports 148. Movement of the sliding sleeve in the direction A, from the closed position shown, in which the inner and outer ports are misaligned, to an open position in which the inner and outer ports are aligned and fluid can flow into the tubular 144, is controlled by use of an electric actuator 150 coupled to the sliding sleeve and electrically connected to the control module 113 and the battery 111. The control module is configured to actuate the actuator 150 in response to a predetermined sequence of signals received from the energy collectors 109. It is to be understood that in alternative embodiments, the collected energy could also be used to control other downhole apparatus.

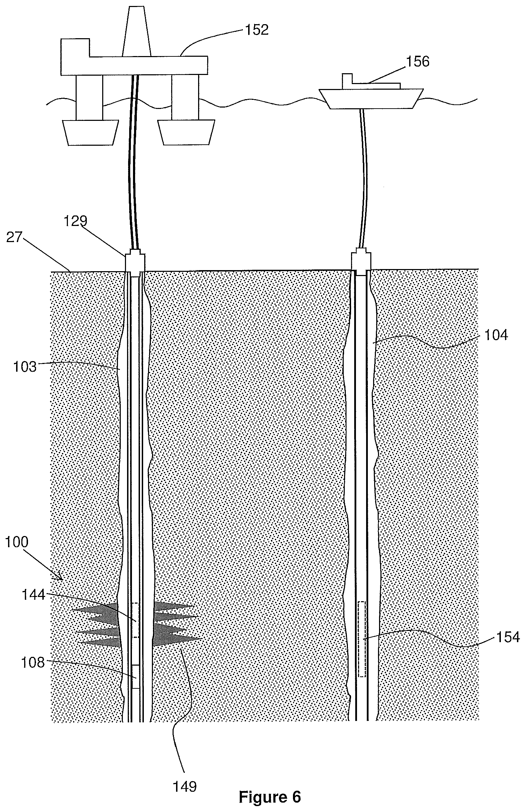

Figure 6 shows one example of the tubing string of Figure 5 in a producing well 103, in the region of a producing formation 149. Production tubing 151 extends from the well up to a floating rig 152.

The well 103 is adjacent to an injection well 104. A service vessel 156 is positioned to inject water into the injection well, so as to stimulate production in the adjacent producing well 103, in accordance with normal industry practice. The apparatus 100 may be used to increase production from the formation 149 by moving the sleeve 146 so as to open the inflow control device 140. By modulating the pressure of water injected into the injection well 104, pressure variations can be induced, which are transmitted to the fluid in the producing well 103. The pressure variations induce corresponding electrical signals from the collectors 109, which cause the control module 113 to actuate the actuator 150, and move the sliding sleeve 109. In alternative embodiments (not shown) the actuator and collectors are hydraulic and the sleeve may be moved incrementally by way of a series of pressure pulses received by the actuators, so as to open the inflow control device.

The apparatus may comprise further sensors or logging apparatus. For example, the apparatus may comprise additional or alternative energy collectors, such as microturbines. Operation of the apparatus controlled and/or transmission of stored data may be effected by e-line from the surface. The accompanying claims and their equivalents are intended to cover such forms and modifications as would fall within the scope of the invention.

## Claims

1. A method for collecting energy in a well, comprising providing an energy collecting arrangement in a well, and **characterised in** using the energy collecting arrangement to collect energy from variations in fluid pressure in the well due to variations in lithostatic pressure.

2. A method according to claim 1, comprising collecting energy in a non-producing well.

3. A method according to claim 1 or claim 2, wherein the variations in lithostatic pressure from which energy is collected result from tidal pressure variations and/or temperature fluctuations in the well.

4. A method according to any preceding claim, comprising operating a downhole tool or downhole apparatus using the collected energy.

5. A method according to claim 4, wherein
the downhole tool/apparatus is operated incrementally, each of the pressure variations in the well moving apparatus by an increment; and/or
the collected energy is used substantially at the same time or over the same period as each fluid pressure variation.

6. A method according to any preceding claim, comprising collecting electrical energy, and/or collecting mechanical energy, optionally by electromagnetic induction and/or from a piezoelectrically generated voltage.

7. A method according to any preceding claim comprising collecting data relating to a downhole property, or more than one downhole property, using a sensor arrangement powered using collected electrical energy.

8. A method according to any preceding claim comprising communicating wirelessly with the energy collecting arrangement or, when dependent on claim 5 or any other claim dependent thereon, the downhole tool, wherein optionally communicating wirelessly is by way of induced pressure variations.

9. A method according to any preceding claim, comprising collecting energy from a pressure differential between a first fluid volume and a second fluid volume, and optionally the first fluid volume is an isolated fluid volume defined by an energy collecting arrangement.

10. A method according to any preceding claim, comprising use of one or more energy collectors, and optionally the wellbore energy collecting arrangement comprising:
a piezoelectric device, configured to generate a voltage which varies in response to variations in fluid pressure; and/or
an energy collector configured to collect electrical energy by way of induction; and/or
a moveable member, such as a diaphragm, piston or turbine, configured to transmit and/or to amplify a motion or deflection caused by changes in fluid pressure, optionally wherein the moveable member is disposed between first and second fluid volumes.

11. A method according to any preceding claim, comprising operating the energy collecting arrangement to collect electrical energy for a first period of time and to function as a sensor arrangement for a second period of time.

12. A downhole tool comprising a wellbore energy collecting arrangement **characterised in that** the wellbore energy collecting arragement is configured to collect energy in a well from fluid pressure variations in the well due to variations in lithostatic pressure for use in the method of any of claims 1 to 11.

13. A downhole tool according to claim 12, comprising a sensor arrangement, operable to determine at least one downhole property, selected from (but not limited to) the group of downhole properties comprising;
temperature; chemical composition, such as composition of a chemical element or elements, e.g. carbon composition, oxygen composition; water saturation, salinity, interfacial properties, conductivity, acoustic properties.

14. A downhole tool according to claim 12 or claim 13, comprising:
a power storage arrangement; or
a communication arrangement, optionally comprising a wireless transmitter, receiver and/or transceiver; or
when dependent on claim 13, the sensor arrangement is configured to receive wireless information and thereby function as a communication arrangement.

## Patentansprüche

1. Verfahren zur Gewinnung von Energie in einem Bohrloch, beinhaltend Bereitstellen einer Energiegewinnungsanordnung in einem Bohrloch und **gekennzeichnet durch** Verwenden der Energiegewinnungsanordnung zum Gewinnen von Energie aus Variationen des Fluiddrucks in dem Bohrloch aufgrund von Variationen des lithostatischen Drucks.

2. Verfahren nach Anspruch 1, beinhaltend Gewinnen von Energie in einem nicht fördernden Bohrloch.

3. Verfahren nach Anspruch 1 oder Anspruch 2, bei welchem die Variationen des lithostatischen Drucks, aus welchen Energie gewonnen wird, aus Gezeitendruckvariationen und/oder Temperaturfluktuationen in dem Bohrloch resultieren.

4. Verfahren nach einem der vorhergehenden Ansprüche, beinhaltend Bedienen eines Bohrlochwerkzeugs oder eines Bohrlochgerätes unter Verwendung der gewonnenen Energie.

5. Verfahren nach Anspruch 4, bei welchem
das Bohrlochwerkzeug/-gerät inkrementell betrieben wird, wobei jede der Druckvariationen in dem Bohrloch das Gerät um ein Inkrement bewegt; und/oder
die gewonnene Energie im Wesentlichen zur gleichen Zeit oder über den gleichen Zeitraum einer jeden Fluiddruckvariation verwendet wird.

6. Verfahren nach einem der vorhergehenden Ansprüche, beinhaltend Gewinnen elektrischer Energie und/oder Gewinnen mechanischer Energie, wahlweise durch elektromagnetische Induktion und/oder aus einer piezoelektrisch erzeugten Spannung.

7. Verfahren nach einem der vorhergehenden Ansprüche, beinhaltend Gewinnen von Daten in Zusammenhang mit einer Bohrlocheigenschaft, oder mehr als einer Bohrlocheigenschaft, unter Verwendung einer Sensoranordnung, welche unter Verwendung gewonnener elektrischer Energie versorgt wird.

8. Verfahren nach einem der vorhergehenden Ansprüche, beinhaltend drahtloses Kommunizieren mit der Energiegewinnungsanordnung oder, in Abhängigkeit von Anspruch 5 oder jedem anderen hiervon abhängigen Anspruch, mit dem Bohrlochwerkzeug, wobei wahlweise drahtloses Kommunizieren mithilfe von induzierten Druckvariationen erfolgt.

9. Verfahren nach einem der vorhergehenden Ansprüche, beinhaltend Gewinnen von Energie aus einer Druckdifferenz zwischen einem ersten Fluidvolumen und einem zweiten Fluidvolumen, und wobei wahlweise das erste Fluidvolumen ein isoliertes Fluidvolumen ist, welches durch eine Energiegewinnungsanordnung definiert wird.

10. Verfahren nach einem der vorhergehenden Ansprüche, beinhaltend Verwenden eines oder mehrerer Energiekollektoren, und wobei wahlweise die BohrlochEnergiegewinnungsanordnung Folgendes beinhaltet:
eine piezoelektrische Vorrichtung, welche konfiguriert ist, um eine Spannung zu erzeugen, welche in Reaktion auf Variationen eines Fluiddrucks variiert; und/oder
einen Energiekollektor, welcher konfiguriert ist, um elektrische Energie durch Induktion zu gewinnen; und/oder
ein bewegliches Element, wie beispielsweise eine Blende, einen Kolben oder eine Turbine, welches konfiguriert ist, um eine durch Veränderungen des Fluiddrucks verursachte Bewegung oder Ablenkung zu übertragen und/oder zu verstärken, wobei wahlweise das bewegliche Element zwischen einem ersten und einem zweiten Fluidvolumen angeordnet ist.

11. Verfahren nach einem der vorhergehenden Ansprüche, beinhaltend Bedienen der Energiegewinnungsanordnung zum Gewinnen elektrischer Energie über einen ersten Zeitraum und zum Funktionieren als eine Sensoranordnung über einen zweiten Zeitraum.

12. Bohrlochwerkzeug, beinhaltend eine Bohrlochenergiegewinnungsanordnung, **dadurch gekennzeichnet, dass** die Bohrlochenergiegewinnungsanordnung konfiguriert ist, um Energie in einem Bohrloch aus Fluiddruckvariationen in dem Bohrloch aufgrund von Variationen des lithostatischen Drucks zum Gebrauch in dem Verfahren nach einem der Ansprüche 1 bis 11 zu gewinnen.

13. Bohrlochwerkzeug nach Anspruch 12, beinhaltend eine Sensoranordnung, welche bedienbar ist, um mindestens eine Bohrlocheigenschaft zu bestimmen, gewählt aus der Gruppe (jedoch nicht hierauf begrenzt) von Bohrlocheigenschaften, beinhaltend;
Temperatur; chemische Zusammensetzung, wie beispielsweise Zusammensetzung eines chemischen Elements oder von chemischen Elementen, beispielsweise Kohlenstoffzusammensetzung, Sauerstoffzusammensetzung; Wassersättigung, Salzgehalt, Schnittstelleneigenschaften, Leitfähigkeit, akustische Eigenschaften.

14. Bohrlochwerkzeug nach Anspruch 12 oder Anspruch 13, Folgendes beinhaltend:
eine Kraftspeicheranordnung; oder
eine Kommunikationsanordnung, welche wahlweise einen drahtlosen Transmitter, Empfänger und/oder Transceiver beinhaltet; oder
wobei die Sensoranordnung in Abhängigkeit von Anspruch 13 konfiguriert ist, um drahtlose Informationen zu empfangen und dadurch als eine Kommunikationsanordnung zu funktionieren.

## Revendications

1. Procédé de récolte d'énergie dans un puits, comprenant la fourniture d'un dispositif de récolte d'énergie dans un puits et **caractérisé en ce qu'**il utilise le dispositif de récolte d'énergie permettant de récolter de l'énergie à partir de variations de la pression de fluide dans le puits dues à des variations de la pression lithostatique.

2. Procédé selon la revendication 1, comprenant la récolte d'énergie dans un puits non-producteur.

3. Procédé selon la revendication 1 ou la revendication 2, dans lequel les variations de la pression lithostatique à partir desquelles l'énergie est récoltée résultent de variations de la pression marémotrice et/ou de fluctuations de température dans le puits.

4. Procédé selon l'une quelconque des revendications précédentes, comprenant l'actionnement d'un outil de fond de trou ou d'un appareil de fond de trou utilisant l'énergie récoltée.

5. Procédé selon la revendication 4, dans lequel
l'outil/l'appareil de fond de trou est actionné de manière incrémentielle, chacune des variations de pression dans le puits déplaçant l'appareil d'un incrément ; et/ou
l'énergie récoltée est utilisée sensiblement en même temps ou sur la même période que chaque variation de pression de fluide.

6. Procédé selon l'une quelconque des revendications précédentes, comprenant la récolte d'énergie électrique, et/ou la récolte d'énergie mécanique, optionnellement par induction électromagnétique et/ou à partir d'une tension générée de manière piézoélectrique.

7. Procédé selon l'une quelconque des revendications précédentes, comprenant la récolte de données relatives à la propriété de fond de trou, ou de plusieurs propriétés de fond de trou, en utilisant un dispositif de capteur alimenté en utilisant l'énergie électrique récoltée.

8. Procédé selon l'une quelconque des revendications précédentes, comprenant la communication sans fil avec le dispositif de récolte d'énergie ou, lorsqu'il dépend de la revendication 5 ou de toute autre revendication dépendante, avec l'outil de fond de trou, dans lequel la communication optionnellement sans fil est effectuée par le biais de variations de pression induites.

9. Procédé selon l'une quelconque des revendications précédentes, comprenant la récolte d'énergie à partir d'un différentiel de pression entre un premier volume de fluide et un second volume de fluide, et optionnellement le premier volume de fluide étant un volume de fluide isolé défini par un dispositif de récolte d'énergie.

10. Procédé selon l'une quelconque des revendications précédentes, comprenant l'utilisation d'un ou plusieurs collecteurs d'énergie et optionnellement le dispositif de collecte de l'énergie de puits de forage comprenant :
un dispositif piézoélectrique, configuré afin de générer une tension qui varie en réponse aux variations de pression de fluide ; et/ou
un collecteur d'énergie configuré afin de collecter de l'énergie électrique par le biais d'une induction ; et/ou
un élément mobile, comme un diaphragme, un piston ou une turbine, configuré afin de transmettre et/ou d'amplifier un mouvement ou une déflexion provoqué(e) par des changements de la pression de fluide, optionnellement dans lequel l'élément mobile est disposé entre un premier et un second volume de fluide.

11. Procédé selon l'une quelconque des revendications précédentes, comprenant l'actionnement du dispositif de collecte d'énergie permettant de collecter de l'énergie électrique pendant un premier laps de temps et permettant de fonctionner comme un dispositif de capteur pendant un second laps de temps.

12. Outil de fond de puits comprenant un dispositif de récolte d'énergie de puits de forage **caractérisé en ce que** le dispositif de récolte d'énergie de puits de forage est configuré afin de collecter de l'énergie dans un puits à partir de variations de pression de fluide dans le puits dues à des variations de la pression lithostatique pour utilisation dans le procédé selon l'une quelconque des revendications 1 à 11.

13. Outil de fond de puits selon la revendication 12, comprenant un dispositif de capteur, pouvant être actionné de façon à déterminer au moins une propriété de fond de puits, sélectionnée parmi (mais sans y être limité) le groupe de propriétés de fond de puits comprenant ;
la température ; la composition chimique, comme la composition d'un élément ou d'éléments chimiques, par exemple la composition de carbone, la composition d'oxygène ; la saturation d'eau, la salinité, les propriétés interfaciales, la conductivité, les propriétés acoustiques.

14. Outil de fond de puits selon la revendication 12 ou la revendication 13, comprenant :
un dispositif de stockage d'énergie ; ou
un dispositif de communication, optionnellement comprenant un émetteur sans fil, un récepteur et/ou un émetteur-récepteur ; ou
lorsqu'il dépend de la revendication 13, le dispositif de capteur est configuré afin de recevoir des informations sans fil et ainsi de fonctionner comme un dispositif de communication.
